# FASCICULE DE BREVET EUROPEEN

(11) **EP 2 753 798 B1**
(45) Date de publication et mention de la délivrance du brevet: **21.10.2015**
(21) Numéro de dépôt: 12762341.1
(22) Date de dépôt: 30.08.2012
(51) Int. Cl.: F01D 11/12, F01D 25/00, F01D 5/28, F01D 11/00, F01D 25/24

(54) **ENSEMBLE FORMÉ D'UN DISTRIBUTEUR DE TURBINE OU UN REDRESSEUR DE COMPRESSEUR EN CMC POUR TURBOMACHINE ET UN ANNEAU SUPPORT D'ABRADABLE, ET TURBINE OU COMPRESSEUR INCORPORANT UN TEL ENSEMBLE**
ANORDNUNG AUS EINER TURBINENDÜSE ODER KOMPRESSORSTATORSCHAUFEL AUS CMC FÜR EINEN TURBINENMOTOR UND ABREIBBAREN STÜTZRING SOWIE TURBINE ODER KOMPRESSOR MIT EINER DERARTIGEN ANORDNUNG
ASSEMBLY CONSISTING OF A TURBINE NOZZLE OR A COMPRESSOR STATOR VANE MADE OF CMC FOR A TURBINE ENGINE AND AN ABRADABLE SUPPORT RING, AND TURBINE OR COMPRESSOR INCLUDING SUCH AN ASSEMBLY

(30) Priorité: 07.09.2011 FR 1157924
(43) Date de publication de la demande: 16.07.2014
(73) Titulaire: SNECMA, 75015 Paris (FR); HERAKLES, 33185 Le Haillan (FR)
(72) Inventeur: BEAUJARD, Antoine Jean-Philippe, F-77550 Moissy-Cramayel Cedex (FR); FREMONT, Elric, Georges, André, F-33700 Merignac (FR)
(74) Mandataire: Boura, Olivier
(86) Numéro de dépôt international: PCT/FR2012/051958
(87) Numéro de publication internationale: WO 2013/034837

(56) Documents cités:
- WO-A1-2010/146288
- FR-A1- 2 928 961
- US-A- 5 715 596
- US-A- 5 749 701
- US-A1- 2011 008 163

## Description

### Arrière-plan de l'invention

L'invention se rapporte aux turbomachines, notamment aux turbomoteurs aéronautiques ou turbines industrielles, plus particulièrement aux distributeurs de turbine et aux redresseurs de compresseur pour de telles turbomachines.

L'amélioration des performances des turbomachines et la réduction de leurs émissions polluantes conduit à envisager des températures de fonctionnement de plus en plus élevées.

Pour des éléments de parties chaudes de turbomachines, il a donc été proposé d'utiliser des matériaux composites à matrice céramique (CMC). En effet, ces matériaux possèdent des propriétés thermostructurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Ainsi, les documents WO 2010/061140, WO 2010/116066 et WO 2011/080443 décrivent la réalisation d'aubes de roues mobiles de turbomachines en CMC à plate-forme et talon intégrés. L'utilisation de matériaux CMC pour des distributeurs de turbine a aussi été proposée, notamment dans le document WO 2010/146288. En outre, le document FR2 928 961 décrit l'ensemble des caractéristiques du préambule de la revendication 1.

Un distributeur de turbine métallique traditionnel est formé de plusieurs secteurs assemblés, chaque secteur comprenant une plate-forme intérieure, une plate-forme extérieure et une pluralité de pales s'étendant entre les plates-formes intérieure et extérieure et solidaires de celles-ci. Les plates-formes intérieure et extérieure délimitent la veine d'écoulement de gaz dans le distributeur. Du côté intérieur, il est courant de prévoir un matériau abradable porté par les plates-formes intérieures et coopérant avec des léchettes d'étanchéité solidaires d'un rotor de turbine. Le matériau abradable est typiquement sous forme d'une structure métallique en nid d'abeilles.

Lorsque le distributeur de turbine est formé de secteurs en matériau CMC, se pose le problème de l'accrochage du matériau abradable.

Un problème similaire se pose avec des redresseurs de compresseur formés de secteurs en matériau CMC supportant un matériau abradable du côté intérieur de plates-formes intérieures.

### Objet et résumé de l'invention

L'invention a pour objet de proposer une solution à ce problème et vise à cet effet un ensemble formé par un distributeur de turbine ou redresseur de compresseur pour turbomachine et un anneau métallique support de matériau abradable, le distributeur de turbine ou redresseur de compresseur comprenant une pluralité de secteurs ayant chacun une plate-forme intérieure, une plate-forme extérieure et des pales s'étendant entre la plate-forme intérieure et la plate-forme extérieure et solidaires de celles-ci, et l'anneau support de matériau abradable étant porté par les plates-formes intérieures des secteurs, du côté intérieur des plates-formes intérieures,
ensemble dans lequel :
les secteurs de distributeur ou de redresseur sont en matériau composite à matrice céramique,
l'anneau support de matériau abradable est formé de secteurs présentant chacun une patte d'accrochage amont et une patte d'accrochage aval qui s'étendent vers l'extérieur,
les plates-formes intérieures des secteurs de distributeur ou de redresseur présentent chacune, du côté intérieur, un crochet amont et un crochet aval qui s'étendent vers l'intérieur, et
l'anneau support de matériau abradable est supporté par le distributeur ou le redresseur par engagement mutuel sans solidarisation de parties d'extrémité des pattes d'accrochage amont et crochets amont et par engagement mutuel sans solidarisation de parties d'extrémité des pattes d'accrochage aval et crochets aval.

Ainsi, les éléments en matériau CMC et en métal sont en contact limité sans solidarisation et le contact est entre des parties en forme de crochets et de pattes qui présentent donc une capacité de déformation élastique, tout cela permettant de s'accommoder de variations dimensionnelles différentielles d'origine thermique.

Avantageusement, les surfaces d'engagement mutuel entre pattes d'accrochage des secteurs d'anneau support de matériau abradable et crochets des secteurs de distributeur ou de redresseur forment en section radiale des segments d'ailes d'un profil en V. Des variations dimensionnelles différentielles en direction radiale et en direction axiale peuvent donc être compensées par glissement le long des surfaces d'engagement. En outre, un bon centrage de l'anneau support de matériau abradable peut ainsi être obtenu.

De préférence, les parties d'extrémité des pattes d'accrochage des secteurs d'anneau support de matériau abradable forment des glissières dans lesquelles sont engagées les parties d'extrémité des crochets des secteurs de distributeur ou de redresseur.

De préférence encore, des butées sont prévues pour limiter en direction circonférentielle l'engagement mutuel des secteurs d'anneau support de matériau abradable et des secteurs de distributeur ou de redresseur.

L'invention a aussi pour objet une turbine de turbomachine comprenant un carter de turbine et au moins un ensemble tel que défini ci-avant formé par un distributeur de turbine en matériau composite à matrice céramique et un anneau métallique support de matériau abradable.

L'invention a encore pour objet un compresseur de turbomachine comprenant un carter de compresseur et au moins un ensemble tel que défini plus haut formé par un redresseur de compresseur en matériau composite à matrice céramique et un anneau métallique support de matériau abradable.

Avantageusement, les plates-formes extérieures des secteurs de distributeur ou de redresseur présentent des pattes d'accrochage qui s'étendent vers l'extérieur, du côté extérieur des plates-formes extérieures, et par l'intermédiaire desquelles l'ensemble est supporté dans le carter de turbine ou de compresseur.

### Brève description des dessins

L'invention sera mieux comprise à la lecture de la description faites ci-après, à titre indicatif mais non limitatif, en référence aux dessins annexés sur lesquels :
- la figure 1 est une vue très schématique partielle en demi-coupe axiale d'une turbine basse pression de turbomachine comprenant un ensemble formé par un distributeur de turbine en matériau CMC et un anneau métallique support d'abradable selon un mode de réalisation de l'invention ;
- la figure 2 est une vue schématique en perspective d'un secteur du distributeur de la figure 1 ;
- la figure 3 est une vue schématique en perspective d'un secteur de l'anneau support de matériau abradable de la figure 1 ;
- la figure 4 est une vue en perspective d'une aube de distributeur mono-pale constitutive du secteur de distributeur de la figure 2 ;
- les figures 5 à 8 illustrent très schématiquement des étapes successives d'un procédé de réalisation d'une préforme fibreuse pour une aube de distributeur telle que celle de la figure 4 ;
- la figure 9 indique des étapes successives d'un procédé de fabrication d'un secteur de distributeur tel que celui de la figure 2 ;
- la figure 10 indique des étapes successives d'un autre procédé de fabrication d'un secteur de distributeur tel que celui de la figure 2 ;
- la figure 11 est une vue schématique partielle en coupe montrant une variante de réalisation de l'accrochage d'un anneau métallique support d'abradable sur un distributeur de turbine en CMC, selon un autre mode de réalisation de l'invention ; et
- la figure 12 est une vue très schématique partielle en demi-coupe axiale d'un compresseur de turbomachine comprenant un ensemble formé par un redresseur de compresseur en matériau CMC et un anneau métallique support d'abradable selon un autre mode de réalisation de l'invention.

### Description détaillée de modes de réalisation

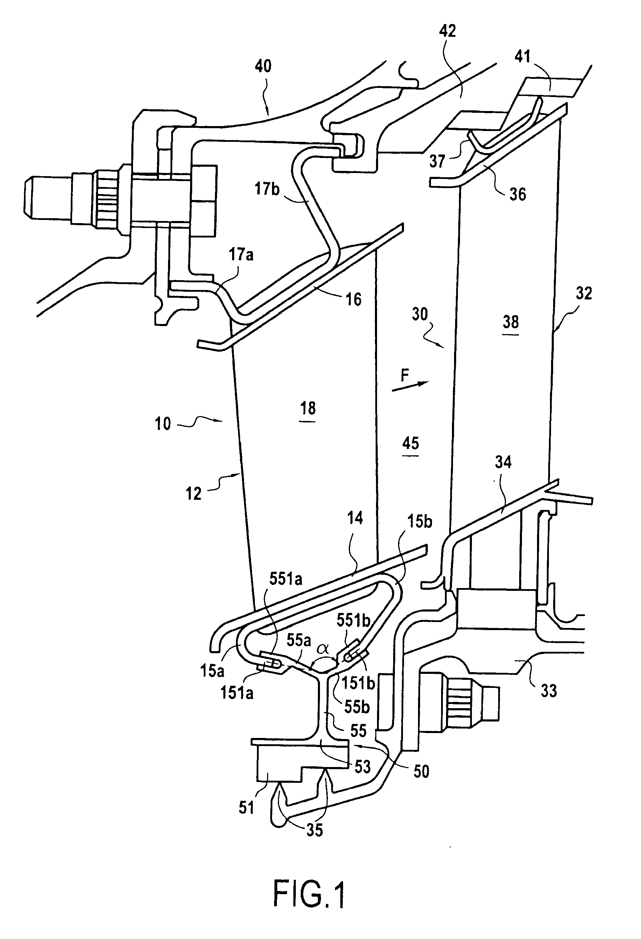

Une turbine basse pression (BP) multi-étages d'une turbomachine, par exemple un turbomoteur aéronautique, telle que montrée partiellement sur la figure 1, comprend une pluralité de distributeurs fixes 10 qui alternent avec des roues mobiles 30 dans le sens d'écoulement du flux gazeux dans la turbine (flèche F) et qui sont montés dans un carter de turbine 40.

Chaque roue mobile 30 comprend une pluralité d'aubes 32 ayant une plate-forme intérieure 34, une plate-forme extérieure ou talon 36 et une pale 38 s'étendant entre les plates-formes 34 et 36 et liée à celles-ci. Du côté intérieur de la plate-forme 34, l'aube se prolonge par un pied engagé dans un logement d'un disque 33. Du côté extérieur, le talon 36 supporte des léchettes 37 en regard d'un matériau abradable 41 porté par un anneau sectorisé 42, pour assurer l'étanchéité aux sommets des aubes 32.

Dans tout le présent texte, les termes "intérieur" et "extérieur" sont utilisés en référence à la position ou orientation par rapport à l'axe de la turbine.

Les aubes 32 peuvent être des aubes métalliques traditionnelles ou des aubes en matériau CMC obtenues par exemple comme décrit dans les documents précités WO 2010/061140, WO 2010/116 066 ou WO 2011/080443.

Au moins l'un des distributeurs, tel que le distributeur 10 de la figure 1, est formé par réunion de plusieurs secteurs annulaires de distributeur en matériau CMC.

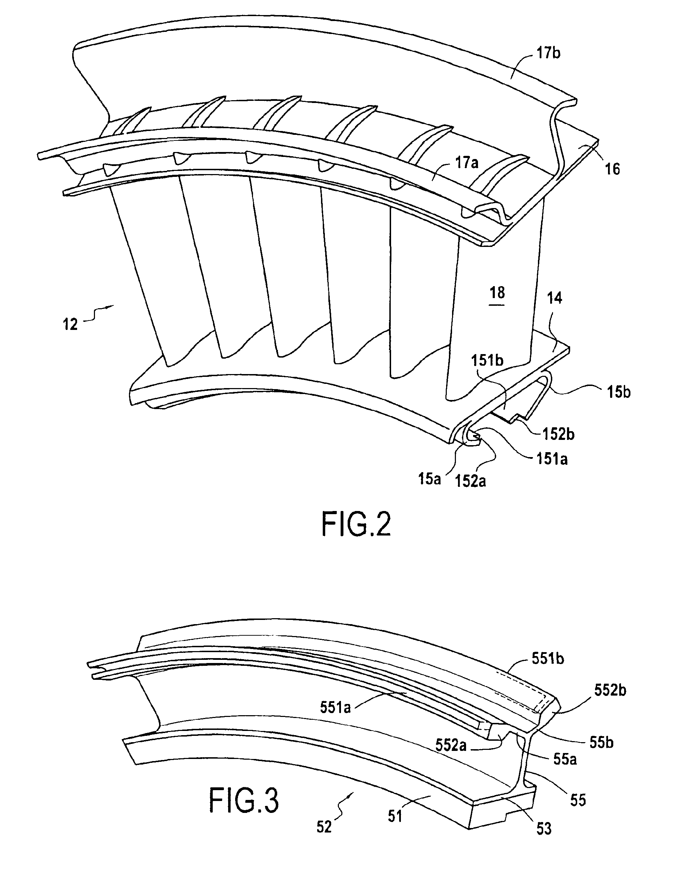

Chaque secteur de distributeur 12 (figures 1 et 2) comprend une plate-forme intérieure 14, une plate-forme extérieure 16 et une pluralité de pales 18 s'étendant entre les plates-formes 14, 16 et solidaires de celles-ci. Les faces extérieures des plates-formes 14, 34 et les faces intérieures des plates-formes 16, 36 délimitent la veine 45 d'écoulement de flux gazeux dans la turbine.

Du côté extérieur, font saillie à partir de la plate-forme extérieure 16 une patte d'accrochage amont 17a et une patte d'accrochage aval 17b chacune sous forme de secteur annulaire à section sensiblement en forme de S. Les pattes d'accrochage 17a, 17b s'étendent sur le même angle que la plate-forme 16. Les pattes d'accrochage 17a, 17b, d'une part, et la plate-forme 16, d'autre part, peuvent être alignées radialement ou être mutuellement décalées légèrement en direction circonférentielle pour recouvrement mutuel au niveau des jonctions entre secteurs. Les parties terminales des pattes 17a, 17b sont orientées respectivement vers l'amont et vers l'aval et sont engagées dans des crochets portés par le carter 40 afin de monter le distributeur 10 dans le carter 40 de façon similaire à un distributeur de turbine métallique.

Dans tout le texte, les termes "amont" et "aval" sont utilisés en référence au sens d'écoulement de flux gazeux dans la veine 45.

Du côté intérieur, font saillie sous la plate-forme intérieure 14 un crochet amont 15a et un crochet aval 15b sous forme de secteurs annulaires à section sensiblement en forme de C, le crochet 15a étant replié vers l'aval tandis que le crochet 15b est replié vers l'amont. Les crochets 15a, 15b s'étendent ici sur le même angle que la plate-forme 14.

Les crochets 15a et 15b supportent et maintiennent en position axiale un anneau métallique sectorisé 50 qui supporte du côté intérieur un matériau abradable 51 en regard de léchettes 35 portées par le disque 33 pour assurer l'étanchéité de la veine 45 du côté intérieur. Les crochets 15a, 15b, d'une part, et la plate-forme 14, d'autre part, peuvent être alignés radialement ou être mutuellement décalés légèrement en direction circonférentielle pour recouvrement mutuel au niveau des jonctions entre secteurs.

L'anneau métallique 50 est formé de secteurs juxtaposés 52 constituant chacun un cartouche d'abradable (figures 1 et 3). Dans l'exemple illustré, chaque secteur d'anneau 52 comprend une base 53 à partir de laquelle fait saillie vers l'extérieur une partie 55 à section sensiblement en forme de Y se terminant par des pattes d'accrochage amont 55a et aval 55b. Les pattes d'accrochage 55a, 55b sont sous forme de secteurs annulaires qui s'étendent sur un même angle que les secteurs d'anneau 52 et sont alignées radialement avec ceux-ci. On notera que la partie 55 de l'anneau 50 peut en variante être à section en V, c'est-à-dire être limitée aux pattes d'accrochage 55a, 55b, en particulier lorsque l'espace disponible du côté intérieur du secteur de distributeur 12 est plus restreint.

Dans l'exemple illustré, l'engagement mutuel entre les crochets 15a et les pattes d'accrochage 55a, d'une part, et entre les crochets 15b et les pattes d'accrochage 55b, d'autre part, est réalisé par engagement des parties terminales 151a, 151b des crochets 15a, 15b dans des glissières respectives 551a, 551b formées aux extrémités des pattes d'accrochage 55a, 55b.

L'engagement est réalisé par coulissement en direction circonférentielle, jusqu'à venue en contact de butées d'arrêt afin d'aligner radialement un secteur de distributeur 12 avec un secteur d'anneau 52. Les butées sont par exemple réalisées par formation d'encoches 152a, 152b à une extrémité circonférentielle des parties terminales 151a, 151b des crochets 15a, 15b (figure 2) et fermeture des glissières 551a, 551b par des parties pleines 552a, 552b à une extrémité circonférentielle des pattes d'accrochage 55a, 55b, les glissières n'étant pas débouchantes à cette extrémité (figure 3). Bien entendu, d'autres formes de butées d'arrêt circonférentiel pourront être adoptées. On pourra également prévoir une butée seulement sur les crochets et pattes d'accrochage amont ou seulement sur les crochets et pattes d'accrochage aval.

Dans l'exemple illustré, les secteurs d'anneau 52 et les secteurs de distributeur 12 ont même dimension angulaire. En variante, la dimension angulaire des secteurs d'anneau pourra être un multiple ou une fraction de celle des secteurs de distributeur.

Avantageusement, les surfaces d'engagement mutuel entre la partie terminale 151a du crochet 15a et la glissière 551a de la patte d'accrochage 55a et les surfaces d'engagement mutuel entre la partie terminale 151b du crochet 15b et la glissière 551b de la patte d'accrochage 55b forment en section radiale des segments rectilignes d'ailes d'un profil en V, ces segments formant en eux un angle α (figure 1) par exemple compris entre 15° et 175°. En outre, ces engagements mutuels sont réalisés sans solidarisation entre les crochets 15a, 15b et les pattes 55a, 55b. Ainsi, la liaison entre un secteur de distributeur 12 en matériau CMC et un secteur 52 d'anneau métallique support d'abradable est réalisée de manière à pouvoir s'accommoder de variations dimensionnelles différentielles d'origine thermique.

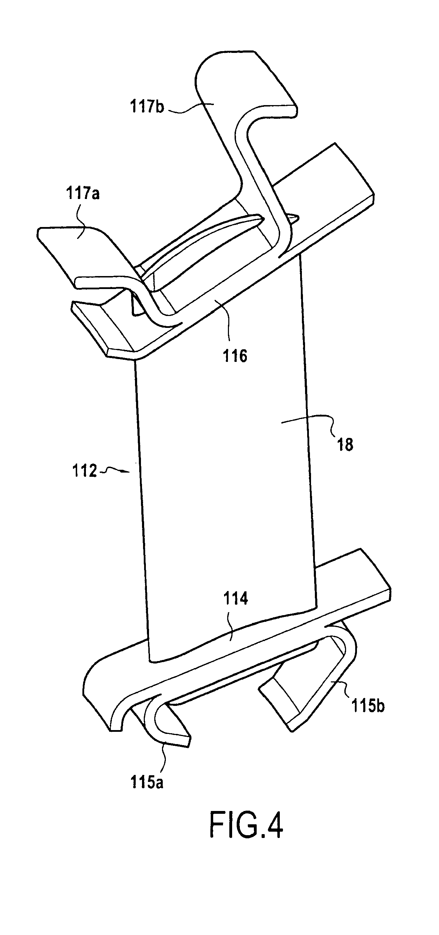

Les secteurs de distributeur 12 peuvent être formés par l'assemblage d'aubes unitaires monopales 112 telle que celle de la figure 4 comprenant une plate-forme intérieure 114, une plate-forme extérieure 116 et une pale unique 18 s'étendant entre les plates-formes 114 et 116 et solidaire de celles-ci. Du côté intérieur, la plate-forme 114 présente des crochets 115a, 115b ayant même profils que les crochets 15a, 15b, respectivement. Du côté extérieur, la plate-forme 116 présente des pattes d'accrochage 117a, 117b ayant même profil que les pattes 17a, 17b, respectivement.

Un mode de réalisation d'une aube 112 telle que celle de la figure 4 sera maintenant décrit. Ce mode de réalisation est similaire à celui décrit dans le document WO 2011/080443 pour une aube de roue mobile de turbomachine.

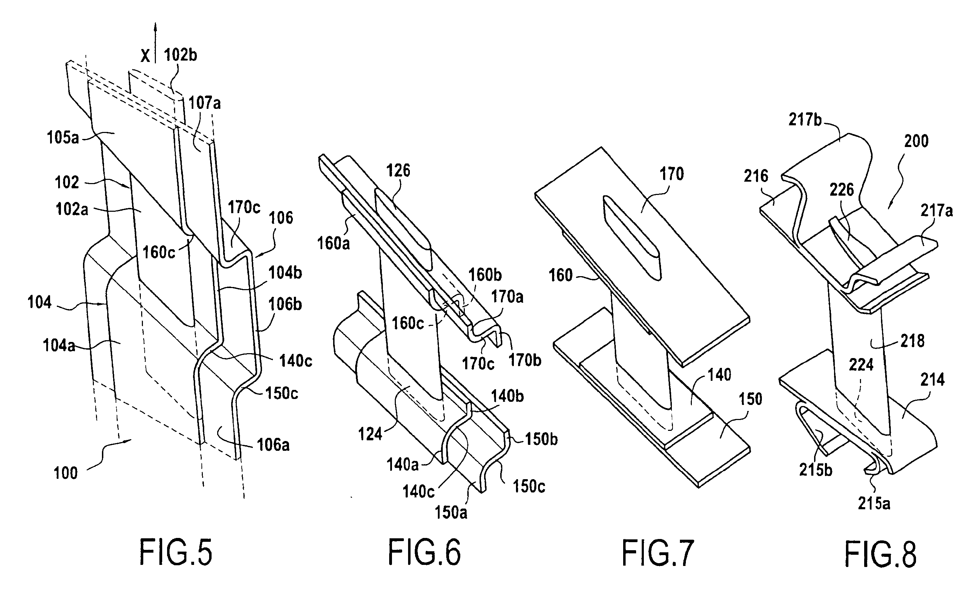

La figure 5 montre très schématiquement une ébauche fibreuse 100 à partir de laquelle une préforme fibreuse d'aube peut être mise en forme afin, après densification par une matrice et usinage éventuel, d'obtenir une aube en matériau CMC telle que l'aube 112.

L'ébauche 100 comprend trois parties 102, 104, 106 obtenues par tissage tridimensionnel ou tissage multi-couches, seules les enveloppes de ces trois parties étant représentées sur la figure 5. La partie 102 est destinée, après mise en forme, à constituer une partie de préforme de pale 18. La partie 104 est destinée, après mise en forme, à constituer les parties de préformes de plate-forme intérieure 114 de plate-forme extérieure 116 qui sont destinées à délimiter la veine 45 d'écoulement de gaz dans la turbine. La partie 106 est destinée, après mise en forme, à constituer les parties de préformes de crochets 115a, 115b et de pattes 117a, 117b.

Les trois parties 102, 104, 106 sont sous forme de bandes tissées s'étendant de façon générale dans une direction X correspondant à la direction générale de l'aube à réaliser. Le tissage est réalisé par exemple avec des fils de chaîne s'étendant dans la direction X, étant noté qu'un tissage avec des fils de trame s'étendant dans cette direction est également possible. Dans chaque partie 102, 104, 106 les fils de chaîne sont disposés sur plusieurs couches liées entre elles au moins partiellement par des fils de trame de plusieurs couches de fils de trame. Différentes armures de tissage peuvent être utilisées, par exemple des armures de type interlock, de type multi-satin ou de type multi-toile. On pourra se référer par exemple au document WO 2006/136755.

La bande fibreuse 102 présente une épaisseur variable déterminée en fonction du profil de la pale de l'aube à réaliser et a une largeur choisie en fonction de la longueur de profil développé (à plat) de la pale. La variation d'épaisseur de la bande fibreuse 102 sur sa longueur est obtenue par exemple en utilisant des fils de chaîne ayant des titres variables. On peut, en variante ou en complément, faire varier la contexture des fils de chaîne (nombre de fils par unité de longueur en sens trame), une contexture plus faible autorisant un amincissement plus prononcé lors de la mise en forme de la préforme d'aube.

Les bandes fibreuses 104 et 106 ont une épaisseur sensiblement constante déterminée en fonction des épaisseurs des plates-formes 114, 116 de l'aube à réaliser. La bande 104 a une largeur correspondant au plus long des profils développés à plat des plates-formes 114, 116 tandis que la bande 106 a une largeur correspondant au plus long des profils développés à plat de l'ensemble des crochets 115a, 115b et de l'ensemble des pattes d'accrochage 117a, 117b. Les bandes 104 et 106 comprennent chacune une première partie 104a, 106a qui s'étend le long et au voisinage d'une première face 102a de la bande 102, une deuxième partie 104b, 106b qui s'étend le long et au voisinage de la deuxième face 102b de la bande 102, et une troisième partie 105a, 107a qui s'étend le long et à proximité de la première face 102a de la bande 102. Les bandes 102 et 104 suivent des trajets parallèles sans traversée mutuelle.

Les parties 104a et 104b de la bande 104 se raccordent par une partie de raccordement 140c qui s'étend transversalement par rapport à la bande 102 à un emplacement correspondant à celui de la plate-forme intérieure de l'aube à réaliser. De même, les parties 106a et 106b de la bande 106 se raccordent par une partie de raccordement 150c qui s'étend transversalement par rapport à la bande 102 et qui est adjacente ou à proximité immédiate de la partie de raccordement 140c.

Les parties 104b et 105a de la bande 140 se raccordent par une partie de raccordement 160c qui s'étend transversalement par rapport à la bande 102 à un emplacement correspondant à celui de la plate-forme extérieure de l'aube à réaliser. De même, les parties 106b et 107a de la bande 106 se raccordent par une partie de raccordement 170c qui s'étend transversalement par rapport à la bande 102 et qui est adjacente ou à proximité immédiate de la partie de raccordement 160c.

Les parties de raccordement 140c, 150c, 160c et 170c traversent la bande 102 en faisant des angles non nuls par rapport à un plan normal à la direction X, pour, dans l'exemple considéré, respecter la géométrie de l'aube à réaliser au niveau des plates-formes intérieure et extérieure. Les bandes 102, 104, 106 sont tissées simultanément, sans liaison entre la bande 102 et les parties 104a, 104b et 105a de la bande 104, sans liaison entre la bande 102 et les parties 106a, 106b et 107a de la bande 106 et sans liaison entre les bandes 104 et 106. Avantageusement, une pluralité d'ébauches successives 100 peuvent être tissées de façon continue dans la direction X. On peut également tisser simultanément plusieurs rangées parallèles d'ébauches 100.

Les figures 6 à 8 montrent très schématiquement comment une préforme fibreuse 200 ayant une forme voisine de celle de l'aube 112 à réaliser (figure 4) peut être obtenue à partir d'une ébauche 100.

La bande fibreuse 102 est coupée à une extrémité en amont des parties de raccordement 140c, 150c en formant une sur-longueur 124 et est coupée à une autre extrémité en arrière des parties de raccordement 160c, 170c en formant une sur-longueur 126, les sur-longueurs 124 et 126 contribuant à assurer un maintien en position des parties de raccordement 140c, 160c au niveau des traversées de la bande fibreuse 102.

Les bandes fibreuses 104 et 106 sont découpées pour laisser subsister des tronçons 140a et 140b de part et d'autre de la partie de raccordement 140c, des tronçons 150a, 150b de part et d'autre de la partie de raccordement 150c, des tronçons 160a, 160b de part et d'autre de la partie de raccordement 160c, et des tronçons 170a, 170b de part et d'autre de la partie de raccordement 170c, comme le montre la figue 6. Les longueurs des tronçons 140a, 140b, 160a, 160b sont choisies en fonction des longueurs développées des plates-formes intérieure et extérieure de l'aube à réaliser délimitant la veine d'écoulement de gaz. Les longueurs des tronçons 150a, 150b, 170a, 170b sont choisies en fonction des longueurs développées des crochets et pattes d'accrochage que présentent les plates-formes intérieure et extérieure de l'aube 112 à réaliser.

Du fait de l'absence de liaison par rapport à la bande 102, les tronçons 140a, 140b et 160a, 160b de la bande 104 peuvent être dépliés pour former des plateaux 140, 160 tandis que les tronçons 150a, 150b et 170a, 170b de la bande 106 peuvent être dépliés pour former des plateaux 150, 170, comme le montre la figure 7.

La préforme fibreuse 200 (figure 8) de l'aube 112 à réaliser (figure 4) est ensuite obtenue par moulage dans un outillage de conformation avec déformation de la bande 102 pour obtenir le profil de la pale 18 de l'aube, déformation des plateaux 140, 160 pour reproduire des formes semblables à celles des plates-formes 114, 116 de l'aube dans leurs parties délimitant la veine d'écoulement de gaz, et déformation des plateaux 150, 170 pour reproduire des formes semblables à celles des crochets 115a, 115b et des pattes 117a, 117b. On obtient ainsi (figure 8) une préforme d'aube 200 avec des parties 214, 216 de préformes de plates-formes intérieure et extérieure, des parties 215a, 215b de préformes de crochets, des parties 217a, 217b de préformes de pattes d'accrochage et une partie 218 de préforme de pale.

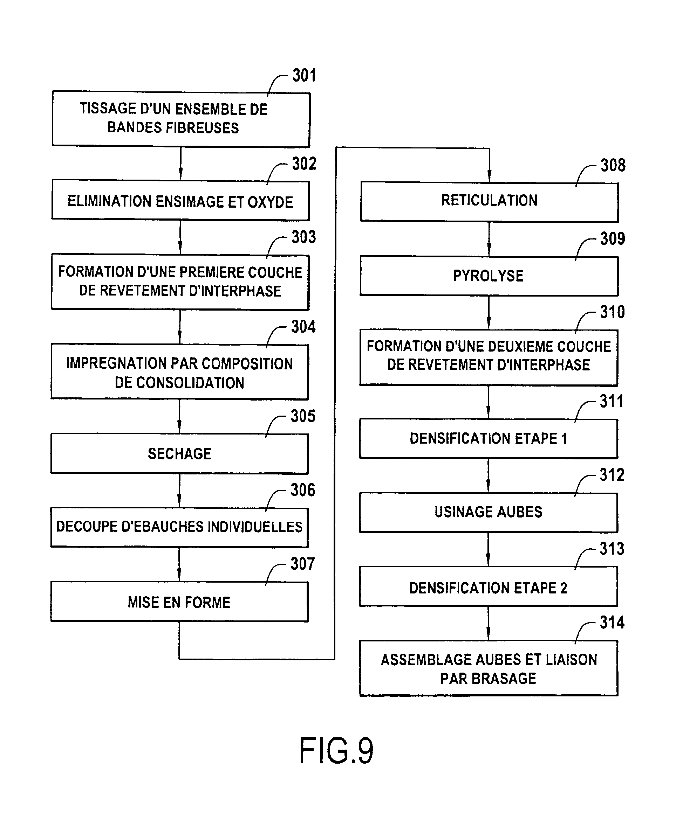

On notera que les étapes de réalisation de la préforme d'aube 200 à partir de l'ébauche 100 sont effectuées avantageusement après traitement des fibres de l'ébauche 100 et imprégnation de celle-ci par une composition de consolidation comme décrit maintenant en référence à la figure 9 qui montre des étapes successives d'un mode de réalisation d'un procédé permettant de fabriquer un secteur de distributeur multi-pales en matériau CMC.

A l'étape 301, un ensemble de bandes fibreuses est tissée par tissage tridimensionnel, comprenant une pluralité d'ébauches fibreuses 100 orientées par exemple en sens chaîne, comme montré sur la figure 5. On peut utiliser pour le tissage des fils en céramique, notamment des fils à base de carbure de silicium (SiC), par exemple ceux fournis sous la dénomination "Nicalon" par la société japonaise Nippon Carbon. D'autres fils en céramique sont utilisables, notamment des fils en oxyde réfractaire, tels que des fils à base d'alumine Al₂O₃, en particulier pour des matériaux CMC de type oxyde/oxyde (fibres du renfort fibreux et matrice en oxyde réfractaire). On pourrait aussi utiliser des fils de carbone pour un matériau CMC à renfort fibreux en carbone.

A l'étape 302, l'ensemble de bandes fibreuses est traitée pour éliminer l'ensimage présent sur les fibres et la présence d'oxyde à la surface des fibres. L'ensimage peut être éliminé par traitement thermique et l'oxyde peut être éliminé par traitement acide.

A l'étape 303, une mince couche de revêtement d'interphase de défragilisation est formée sur les fibres de l'ensemble de bandes fibreuses par infiltration chimique en phase gazeuse, ou CVI ("Chemical Vapour Infiltration"). Le matériau d'interphase est par exemple du carbone pyrolytique PyC, du nitrure de bore BN ou du carbone dopé au bore BC. L'épaisseur de la couche formée est par exemple comprise entre 10 nanomètres et 100 nanomètres pour conserver une capacité de déformation des ébauches fibreuses.

Des étapes d'élimination d'ensimage, de traitement acide et de formation de revêtement d'interphase sur un substrat en fibres SiC sont décrites dans le document US 5 071 679.

A l'étape 304, l'ensemble de bandes fibreuses est ensuite imprégnée par une composition de consolidation, typiquement une résine précurseur de carbone ou une résine précurseur de céramique éventuellement diluée dans un solvant.

Après séchage (étape 305), les ébauches fibreuses individuelles sont découpées (étape 306) comme illustré par la figure 6.

A l'étape 307, une ébauche ainsi découpée est mise en forme (comme illustré par les figures 7 et 8) et placée dans un outillage par exemple en graphite pour conformation des parties de préforme de pale, de préformes de plates-formes, et de préformes de pattes d'accrochage et crochets.

Ensuite, la résine est réticulée (étape 308) puis pyrolysée (étape 309), la réticulation et la pyrolyse pouvant être enchaînées par élévation progressive de la température dans l'outillage.

Après pyrolyse, on obtient une préforme d'aube consolidée par le résidu de pyrolyse. La quantité de résine de consolidation est choisie suffisante mais sans trop d'excès pour que le résidu de pyrolyse lie les fibres de la préforme afin que celle-ci soit manipulable en conservant sa forme sans l'assistance d'un outillage.

Une deuxième couche de revêtement d'interphase de défragilisation est formée par CVI, par exemple en PyC, BN ou BC avec une épaisseur de préférence au moins égale à 100 nanomètres (étape 310). La réalisation d'un revêtement d'interphase en deux couches avant et après consolidation est décrite dans le document EP 2 154 119.

Une densification par matrice céramique de la préforme consolidée est ensuite réalisée par exemple par CVI. La matrice peut être en SiC ou être une matrice auto-cicatrisante comprenant des phases de matrice en carbone pyrolytique PyC, en carbure de bore B₄C ou en système ternaire Si-B-C comme décrit notamment dans les documents US 5 246 756 et US 5 965 266. Comme indiqué plus haut, d'autres types de matrice céramique peuvent être envisagés, notamment des matrices en oxyde réfractaire, par exemple en alumine, en particulier pour des matériaux CMC de type oxyde/oxyde. La densification peut alors être réalisée par voie liquide, c'est-à-dire par imprégnation par un précurseur liquide de la matrice céramique avec transformation du précurseur par traitement thermique, ou imprégnation par une composition contenant de la poudre céramique, la matrice étant alors obtenue par frittage.

La densification est de préférence réalisée en deux étapes 311, 313 séparées par une étape 312 d'usinage de l'aube à ses dimensions désirées. On obtient alors une aube telle que celle 112 de la figure 4.

L'étape suivante 314 consiste à réunir et lier entre elles plusieurs aubes pour former un secteur de distributeur multi-pales en matériau CMC tel que le secteur 12 de la figure 2. Les aubes sont liées entre elles par brasage. Le brasage de pièces en matériau CMC, notamment à matrice SiC, est connu. On pourra se référer par exemple aux documents FR 2 664 518 et FR 2 745 808.

Les encoches 152a, 152b (figure 2) peuvent être réalisées lors de l'étape d'usinage 312 sur l'une des aubes constitutives d'un secteur de distributeur. Elles peuvent en variante être réalisées après assemblage du secteur.

Le nombre de pales du distributeur est de 6 dans l'exemple de la figure 2. Il pourrait bien entendu être plus élevé ou moins élevé.

Après obtention de secteurs de distributeur de turbine en matériau CMC, ceux-ci sont munis de secteurs de l'anneau 50 support d'abradable, comme décrit plus haut.

Un distributeur de turbine complet en matériau CMC portant un anneau support d'abradable est ensuite constitué par le montage des secteurs 12 de distributeur dans le carter de turbine au moyen des pattes d'accrochage 17a, 17b. Le nombre de secteurs formant un distributeur complet est par exemple compris entre 16 et 40.

L'étanchéité inter-secteurs peut éventuellement être améliorée au moyen de languettes disposées à l'interface entre secteurs de distributeur adjacents, comme cela est bien connu dans le cas de secteurs de distributeur métalliques.

Dans ce qui précède, l'assemblage des aubes 112 pour former un secteur de distributeur 12 est réalisé en juxtaposant sensiblement bord à bord les plates-formes intérieures 114 et extérieures 116. En variante, l'assemblage pourra être réalisé avec léger chevauchement des bords voisins des parties des plates-formes 114 et 116 délimitant la veine 45, le chevauchement étant obtenu par soyage pour ne pas affecter la géométrie de la veine.

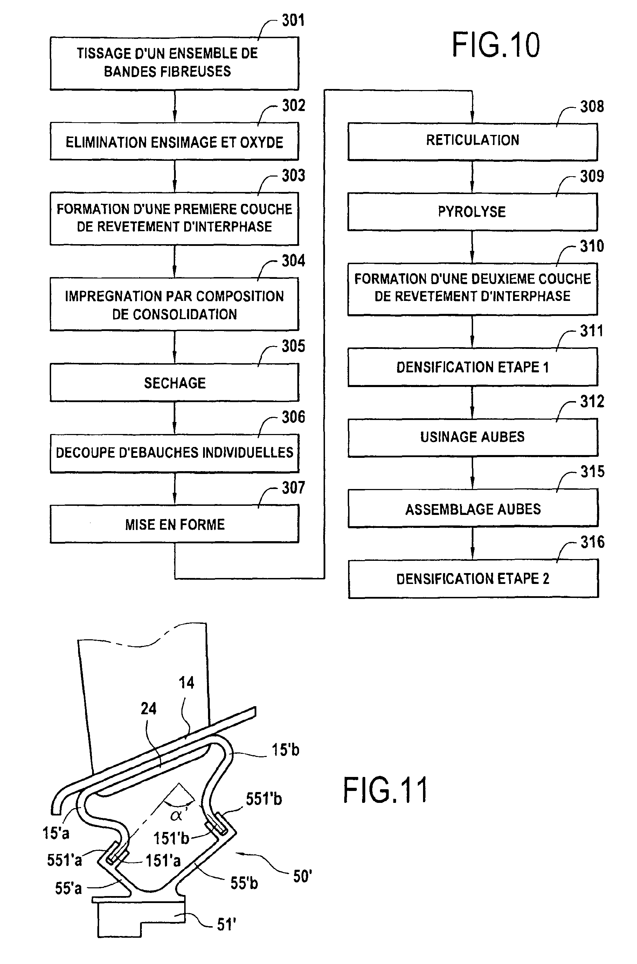

La figure 10 indique des étapes successives d'un autre procédé de fabrication d'un secteur de distributeur de turbine en CMC. Les étapes 301 à 312 sont identiques à celles du procédé de la figure 9.

Après l'étape d'usinage 312, plusieurs aubes sont maintenues ensemble pour former un secteur de distributeur (étape 315). L'assemblage des aubes peut être réalisé au moyen d'un outillage maintenant les aubes côte-à-côte, et/ou par collage pré-céramique, c'est-à-dire par collage par une résine précurseur de céramique, par exemple une résine polysilane, polysiloxane, polysilazane, polycarbosilane ou silicone, comme connu en soi. Une deuxième étape de densification ou co-densification des aubes assemblées est effectuée (étape 316), similaire à l'étape 313 du procédé de la figure 9 mais réalisée sur un secteur de distributeur complet. Lorsqu'un assemblage par collage pré-céramique a été réalisé, la réticulation et la pyrolyse de la résine pour transformation en céramique peuvent être réalisées lors de la montée en température pour la deuxième étape de densification.

La figure 11 illustre une variante de réalisation de l'accrochage des secteurs d'anneau abradable aux secteurs de distributeur en matériau CMC. Cette variante se distingue du mode de réalisation de la figure 1 par la forme des crochets amont 15'a et aval 15'b qui sont saillie à la face intérieure de la plate-forme intérieure 14 et par la forme des pattes d'accrochage amont 55'a et aval 55'b des secteurs de l'anneau 50' support de l'abradable 51'.

Les crochets 15'a et 15'b ont une section sensiblement en forme de S, la partie terminale 151'a du crochet 15'a étant orientée vers l'amont tandis que la partie terminale 151'b du crochet 15'b est orientée vers l'aval.

Les pattes d'accrochage 55'a et 55'b se terminent par des glissières 551'a, 551'b dans lesquelles sont engagées les parties terminales 151'a, 151'b des crochets 15'a, 15'b, sans solidarisation entre les crochets 15'a, 15'b et les pattes 55'a, 55'b.

Les surfaces d'engagement mutuel entre crochets 15'a, 15'b et pattes 55'a, 55'b forment en section radiale des segments rectilignes d'ailes d'un profil en V, ces segments formant entre eux un angle α'. L'angle α' est de préférence compris entre 15° et 175°.

Dans la description détaillée qui précède, est envisagée l'application de l'invention à un distributeur de turbine basse pression. L'invention est toutefois applicable à des distributeurs de turbine en CMC pour des corps de turbine autres qu'un corps basse pression, ainsi qu'à des redresseurs de compresseur, notamment dans les étages de compresseur exposés en service à des températures élevées.

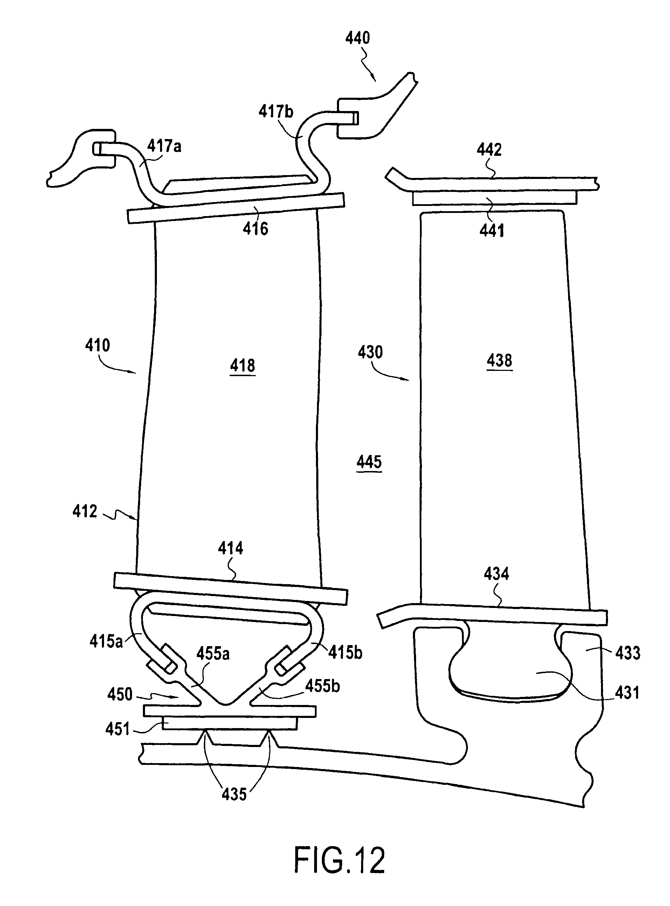

Un compresseur multi-étages d'une turbomachine, par exemple un turbomoteur aéronautique est montré partiellement et de façon très schématique sur la figure 12. Le compresseur, par exemple un compresseur haute pression, comprend une pluralité de redresseurs fixes 410 qui alternent avec des roues mobiles 430 et sont montés dans un carter de compresseur 440.

Chaque roue mobile 430 comprend une pluralité d'aubes 432 ayant une plate-forme intérieure 434 solidaire d'une pale 438. Du côté intérieur de la plate-forme intérieure, chaque aube 432 se prolonge par un pied 431 engagé dans un logement d'un rotor 433. A leur extrémité extérieure, les pales 438 des aubes peuvent présenter des léchettes (non représentées) en regard d'un revêtement abradable 441 porté par un anneau sectorisé 442 supporté par le carter de compresseur.

Au moins l'un des redresseurs, par exemple le redresseur 410 de la figure 12, est réalisé par assemblage de secteurs de distributeur 412 en matériau CMC.

Chaque secteur de redresseur est formé par assemblage d'aubes unitaires mono-pales et comprend une plate-forme intérieure 414, une plate-forme extérieure 416 et des pales 418 s'étendant entre les plates-formes 414 et 416 et solidaire de celles-ci.

Les faces extérieures des plates-formes intérieures 414 et les faces intérieures des plates-formes extérieures 416 délimitent la veine 445 d'écoulement d'air dans le compresseur au niveau du redresseur 410.

Du côté intérieur, chaque plate-forme 414 présente des crochets 415a, 415b tandis que, du côté extérieur, chaque plate-forme 416 présente des pattes d'accrochage 417a, 417b.

Les parties terminales des pattes d'accrochage 417a, 417b sont engagées dans des crochets portés par le carter 440 afin de monter les secteurs de redresseur dans le carter 440.

Les crochets 415a et 415b supportent et maintiennent en position un anneau métallique sectorisé 450 qui supporte du côté intérieur un matériau abradable 451 en regard de léchettes 435 portées par le disque 433.

L'anneau métallique 450 est formé de secteurs juxtaposés s'étendant par exemple sur un même angle que les secteurs de redresseur et constituant chacun une cartouche d'abradable. De la même manière que pour l'anneau 50 du mode de réalisation des figures 1 et 3, chaque secteur de l'anneau 450 présente du côté extérieur des pattes d'accrochage 455a, 455b qui forment à leurs extrémités des glissières dans lesquelles sont engagées sans solidarisation les parties terminales des crochets 415a, 415b, des butées d'arrêt circonférentiel étant prévues pour aligner radialement chaque secteur de l'anneau 450 avec un secteur de redresseur. Egalement comme dans le cas du mode de réalisation des figures 1 et 3, les surfaces d'engagement mutuel entre les extrémités des pattes d'accrochage 455a, 455b et celles des crochets 415a, 415b forment en section radiale des segments rectiligne d'ailes du profil en V formant entre eux un angle compris par exemple entre 15° et 175°.

Les aubes unitaires mono-pales constituant chaque secteur de redresseur sont réalisées et assemblées entre elles comme décrit plus haut pour les aubes unitaires 12 formant des secteurs de distributeur de turbine.

## Revendications

1. Ensemble formé par un distributeur (10) de turbine ou un redresseur (410) de compresseur pour turbomachine et un anneau métallique (50) support de matériau abradable, le distributeur de turbine ou redresseur de compresseur comprenant une pluralité de secteurs (12 ; 412) ayant chacun une plate-forme intérieure (14 ; 414), une plate-forme extérieure (16 ; 416) et des pales (18 ; 418) s'étendant entre la plate-forme intérieure et la plate-forme extérieure et solidaires de celles-ci, et l'anneau (50 ; 450) support de matériau abradable étant porté par les plates-formes intérieures des secteurs, du côté intérieur des plates-formes intérieures,
**caractérisé en ce que** les secteurs de distributeur ou de redresseur sont en matériau composite à matrice céramique,
l'anneau (50 ; 450) support de matériau abradable est formé de secteurs présentant chacun une patte d'accrochage amont (55a ; 455a) et une patte d'accrochage aval (55b ; 455b) qui s'étendent vers l'extérieur,
les plates-formes intérieures (14 ; 414) des secteurs de distributeur ou de redresseur présentent chacune, du côté intérieur, un crochet amont (15a ; 415a) et un crochet aval (15b ; 415b) qui s'étendent vers l'intérieur, et
l'anneau support de matériau abradable est supporté par le distributeur ou le redresseur par engagement mutuel sans solidarisation de parties d'extrémité des pattes d'accrochage amont et crochets amont et par engagement mutuel sans solidarisation de parties d'extrémité des pattes d'accrochage aval et crochets aval.

2. Ensemble selon la revendication 1, **caractérisé en ce que** les surfaces d'engagement mutuel entre pattes d'accrochage (55a, 55b ; 455a, 455b) des secteurs d'anneau support de matériau abradable et crochets (15a, 15b ; 415a, 415b) des secteurs de distributeur ou de redresseur forment en section radiale des segments d'ailes d'un profil en V.

3. Ensemble selon l'une quelconque des revendications 1 et 2, **caractérisé en ce que** les parties d'extrémité des pattes d'accrochage des secteurs d'anneau support de matériau abradable forment des glissières dans lesquelles sont engagées les parties d'extrémité des crochets des secteurs de distributeur ou de redresseur.

4. Ensemble selon l'une quelconque des revendications 1 à 3, **caractérisé en ce que** des butées sont prévues pour limiter en direction circonférentielle l'engagement mutuel des secteurs d'anneau support de matériau abradable et des secteurs de distributeur ou de redresseur.

5. Turbine de turbomachine comprenant un carter de turbine (40) et au moins un ensemble formé par un distributeur de turbine (10) en matériau composite à matrice céramique et un anneau métallique (50) support de matériau abradable selon l'une quelconque des revendications 1 à 4.

6. Turbine selon la revendication 5, **caractérisée en ce que** les plates-formes extérieures (16) des secteurs (12) de distributeur présentent des pattes d'accrochage qui s'étendent vers l'extérieur, du côté extérieur des plates-formes extérieures, et par l'intermédiaire desquelles ledit ensemble est supporté dans le carter de turbine (40).

7. Compresseur de turbomachine comprenant un carter de compresseur (440) et au moins un ensemble formé par un redresseur de compresseur (410) en matériau composite à matrice céramique et un anneau métallique (450) support de matériau abradable selon l'une quelconque des revendications 1 à 4.

8. Compresseur selon la revendication 7, **caractérisé en ce que** les plates-formes extérieures (416) des secteurs (412) de redresseur présentent des pattes d'accrochage qui s'étendent vers l'extérieur, du côté extérieur des plates-formes extérieures, et par l'intermédiaire desquelles ledit ensemble est supporté dans le carter de compresseur (440).

## Patentansprüche

1. Anordnung, die von einem Leitrad (10) einer Turbine oder einem Leitapparat (410) eines Verdichters für eine Turbomaschine und einem metallischen Tragring (50) aus Abriebmaterial gebildet ist, wobei das Turbinenleitrad oder der Verdichter-Leitapparat eine Vielzahl von Sektoren (12; 412) umfasst, die jeweils eine Innenplattform (14; 414), eine Außenplattform (16; 416) und Schaufeln (18; 418), welche sich zwischen der Innenplattform und der Außenplattform erstrecken und mit diesen fest verbunden sind, aufweisen, und wobei der Tragring (50; 450) aus Abriebmaterial durch die Innenplattformen der Sektoren, auf der Innenseite der Innenplattformen getragen ist,
**dadurch gekennzeichnet, dass** die Leitrad- oder Leitapparatsektoren aus Keramikmatrix-Verbundwerkstoff bestehen,
der Tragring (50; 450) aus Abriebmaterial von Sektoren gebildet ist, die jeweils eine stromaufwärtige Anschlusslasche (55a; 455a) und eine stromabwärtige Anschlusslasche (55b; 455b), die nach außen verlaufen, aufweisen,
die Innenplattformen (14; 414) der Leitrad- oder Leitapparatsektoren jeweils auf der Innenseite einen stromaufwärtigen Haken (15; 415a) und einen stromabwärtigen Haken (15b; 415b), die nach innen verlaufen, aufweisen, und
der Tragring aus Abriebmaterial durch das Leitrad oder den Leitapparat durch gegenseitigen Eingriff ohne festes Verbinden von Endteilen der stromaufwärtigen Anschlusslaschen und stromaufwärtigen Haken sowie durch gegenseitigen Eingriff ohne festes Verbinden von Endteilen der stromabwärtigen Anschlusslaschen und stromabwärtigen Haken getragen ist.

2. Anordnung nach Anspruch 1, **dadurch gekennzeichnet, dass** die gegenseitigen Eingriffsflächen zwischen Anschlusslaschen (55a, 55b; 455a, 455b) der Tragringsektoren aus Abriebmaterial und Haken (15a, 15b; 415a, 415b) der Leitrad- oder Leitapparatsektoren im radialen Querschnitt Segmente von Flügeln eines V-Profils bilden.

3. Anordnung nach einem der Ansprüche 1 und 2, **dadurch gekennzeichnet, dass** die Endteile der Anschlusslaschen der Tragringsektoren aus Abriebmaterial Gleitschienen bilden, in die die Endteile der Haken der Leitrad- oder Leitapparatsektoren eingesteckt sind.

4. Anordnung nach einem der Ansprüche 1 bis 3, **dadurch gekennzeichnet, dass** Anschläge vorgesehen sind, um den gegenseitigen Eingriff der Tragringsektoren aus Abriebmaterial und der Leitrad- oder Leitapparatsektoren in Umfangsrichtung zu begrenzen.

5. Turbine einer Turbomaschine, umfassend ein Turbinengehäuse (40) und wenigstens eine Anordnung, die von einem Turbinenleitrad (10) aus Keramikmatrix-Verbundwerkstoff und einem metallischen Tragring (50) aus Abriebmaterial gebildet ist, nach einem der Ansprüche 1 bis 4.

6. Turbine nach Anspruch 5, **dadurch gekennzeichnet, dass** die Außenplattformen (16) der Leitradsektoren (12) Anschlusslaschen aufweisen, die auf der Außenseite der Außenplattformen nach außen verlaufen und mittels derer die Anordnung in dem Turbinengehäuse (40) getragen ist.

7. Verdichter einer Turbomaschine, umfassend ein Verdichtergehäuse (440) und wenigstens eine Anordnung, die von einem Verdichter-Leitapparat (410) aus Keramikmatrix-Verbundwerkstoff und einem metallischen Tragring (450) aus Abriebmaterial gebildet ist, nach einem der Ansprüche 1 bis 4.

8. Verdichter nach Anspruch 7, **dadurch gekennzeichnet, dass** die Außenplattformen (416) der Leitapparatsektoren (412) Anschlusslaschen aufweisen, die auf der Außenseite der Außenplattformen nach außen verlaufen und mittels derer die Anordnung in dem Verdichtergehäuse (440) getragen ist.

## Claims

1. An assembly formed by a turbine nozzle (10) or a compressor diffuser (410) for a turbine engine and by a metal abradable material support ring (50), the turbine nozzle or compressor diffuser comprising a plurality of sectors (12; 412), each having an inner platform (14; 414), an outer platform (16; 416), and airfoils (18; 418) extending between the inner platform and the outer platform and secured thereto, and the abradable material support ring (50; 450) being carried by the inner platforms of the sectors on the insides of the inner platforms, the assembly being **characterized in that**:
the nozzle or diffuser sectors are made of ceramic matrix composite material;
the abradable material support ring (50; 450) is made of sectors, each presenting an upstream attachment tab (55a; 455a) and a downstream attachment tab (55b; 455b) extending outwards;
the inner platforms (14; 414) of the nozzle or diffuser sectors each present, on the inside, an upstream hook (15a; 415a) and a downstream hook (15b; 415b) extending inwards; and
the ring supporting the abradable material is supported by the nozzle or the diffuser by mutually engaging without fastening together the end portions of the upstream attachment tabs and the upstream hooks and by mutually engaging without fastening together the end portions of the downstream attachment tabs and the downstream hooks.

2. An assembly according to claim 1, **characterized in that** the mutual engagement surfaces between the attachment tabs (55a, 55b; 455a, 455b) of the abradable material support ring sectors and the hooks (15a, 15b; 415a, 415b) of the nozzle or diffuser sectors form, in radial section, flange segments of a V-shaped profile.

3. An assembly according to claim 1 or claim 2, **characterized in that** the end portions of the attachment tabs of the abradable material support ring sectors form slideways in which the end portions of the hooks of the nozzle or diffuser sectors are engaged.

4. An assembly according to any one of claims 1 to 3, **characterized in that** abutments are provided to limit in a circumferential direction the mutual engagement of the abradable material support ring sectors and the nozzle or diffuser sectors.

5. A turbine engine turbine comprising a turbine casing (40) and at least one assembly formed by a turbine nozzle (10) made of ceramic matrix composite material and by an abradable material support ring (50) made of metal according to any one of claims 1 to 4.

6. A turbine according to claim 5, **characterized in that** the outer platforms (16) of the nozzle sectors (12) present attachment tabs that extend outwards from the outsides of the outer platforms, whereby said assembly is supported in the turbine casing (40).

7. A turbine engine compressor comprising a compressor casing (440) and at least one assembly formed by a compressor diffuser (410) made of ceramic matrix composite material and by an abradable material support ring (450) made of metal according to any one of claims 1 to 4.

8. A compressor according to claim 7, **characterized in that** the outer platforms (416) of the diffuser sectors (412) present attachment tabs that extend outwards from the outside of the outer platforms, whereby said assembly is supported in the compressor casing (440).
